# EUROPEAN PATENT SPECIFICATION

(11) **EP 1 792 790 B1**
(45) Date of publication and mention of the grant of the patent: **28.11.2007**
(21) Application number: 04766996.5
(22) Date of filing: 21.09.2004
(51) Int. Cl.: B60R 21/16

(54) **KNEE AIRBAG**
KNIE-AIRBAG
AIRBAG POUR LES GENOUX

(43) Date of publication of application: 06.06.2007
(73) Proprietor: Dalphi Metal España, S.A., 28006 Madrid (ES)
(72) Inventor: NEIRA SARMIENTO, Flor, E-28042 Madrid (ES); DEL VALLE ALONSO, Rene Hipolito, E-28042 Madrid (ES); GONZALO LÓPEZ, Alfredo, E-28042 Madrid (ES); MUÑOZ MELGAR, Ruth, E-28042 Madrid (ES)
(74) Representative: Elzaburu Marquez, Alberto
(86) International application number: PCT/ES2004/070073
(87) International publication number: WO 2006/040361

(56) References cited:
- EP-A2- 0 957 007
- EP-A2- 1 310 408
- ES-T3- 2 040 123
- US-A- 3 897 961
- US-A1- 2004 178 607
- US-B1- 6 176 509

## Description

### FIELD OF THE INVENTION

The present invention relates to an airbag intended for retaining the knees of the occupant of an automotive vehicle in the event of a crash or collision of the vehicle or any other situation which endangers their personal safety.

### BACKGROUND OF THE INVENTION

The function of a knee airbag is to protect the lower limbs of the occupant during a collision as well as to aid in the good positioning of the occupant so that the remaining retention systems function correctly.

To that end it is essential that the knee airbag be placed in the final position as soon as possible.

The known knee airbags are usually placed below the steering column of the car. In this area there is a multitude of pieces. The volume taken up by the knee airbag is therefore a very important parameter, given that not only must it not have any other surrounding piece interfering with it, but minimal allowance must be respected. If the cushion is tightly packed and folded to reduce its volume, it takes a long time to deploy and as a result is positioned too late without correctly protecting the lower limbs and the movement of the pelvis of the occupant of the vehicle. In relation to this drawback, proposals are known based on an optimization of the folding of the cushion for suitably controlling its deployment.

Knee airbags are known from document EP 1310408 showing the features of the preamble of claim 1 and, comprising a diffuser tube connected to a gas generator fixed to the inflatable cushion, being this cushion folded, and a housing for supporting the airbag assembly to the vehicle. A folding method for airbags is known from document EP 0957007.

On the other hand, gas generators are normally used in known knee airbags having diameters between 25 and 30 mm which, in addition to the rest of the components, mean that the volume of the airbag is greater than that desired. Solutions provided for this drawback in the known art are based on the use of materials facilitating the reduction in volume.

### SUMMARY OF THE INVENTION

The present invention proposes a knee airbag providing satisfactory solutions to the mentioned problems: it has a reduced volume and is easily integrated in the automobile structure.

The airbag according to the invention comprises, like known airbags, an inflatable cushion, a gas generator and a protective cover, and unlike those: a diffuser tube connected to the gas generator and fixed to the inflatable cushion along one of its sides, a metal housing for supporting the airbag assembly and fixing it to the vehicle. In turn, the cushion is folded such that in the folded state it has a deployed part in the Y direction.

In its final configuration, the airbag must have the greatest possible width in the Y direction and the least possible height which are compatible with the configuration of the area of the vehicle where it is fixed.

In view of the different possibilities of integrating the airbag in the vehicle structure, two embodiment variants are considered: in the first one, the cover is fixed rigidly to the metal housing; in the second one, the cover is fixed by means of mediums allowing a certain allowance for movement in relation to the housing.

A way of folding the cushion which allows obtaining the mentioned features considers a first folding of the side edges of the airbag, leaving, as has been stated, an deployed part in the Y direction so as to maximally facilitate deployment, and then a folding in the direction of the deployment in a first helical part and a second corrugated part.

The presence of the mentioned diffuser tube on one hand allows locating the gas generator in a suitable location within the vehicle structure which facilitates a better use of the available volume in the vehicle, and on the other hand favoring gas flow.

Moreover, the reduced level of packing of the cushion and its virtually deployed state in the Y direction allow it to be positioned very quickly, minimizing the risk that it may deploy between the knees of the occupant.

Other features and advantages of the present invention will become evident from the following detailed description of an illustrative and by no means limiting embodiment of its object in relation to the attached drawings.

### DESCRIPTION OF THE DRAWINGS

Figure 1 shows a schematic view of the basic elements of a knee airbag according to the present invention.
Figure 2 shows a schematic exploded perspective view of a knee airbag according to the present invention.
Figure 3 shows a schematic perspective view of a knee airbag once completely assembled, according to a first embodiment of the invention.
Figure 4 shows a perspective view of the metal housing of the knee airbag shown in Figure 3.
Figure 5 shows a perspective view of the cushion of the knee airbag shown in Figure 3 in the folded state.
Figure 6 shows a cross-sectional view of the knee airbag shown in Figure 3 located in an automotive vehicle.
Figure 7 shows a schematic perspective view of a knee airbag according to a second embodiment of the invention.
Figure 8 shows a perspective view of the cover of the knee airbag shown in Figure 7 from the inside.
Figure 9 shows a schematic view of the cover of the knee airbag shown in Figure 7 from the outside, integrated in the on-board panel of the vehicle.
Figure 10 shows a schematic view of the two sides of a cushion which can be used in the knee airbag according to the present invention.
Figures 11, 12 and 13 show schematic views of the three steps of a folding process of the cushion of the knee airbag according to the present invention.

### DETAILED DESCRIPTION OF THE INVENTION

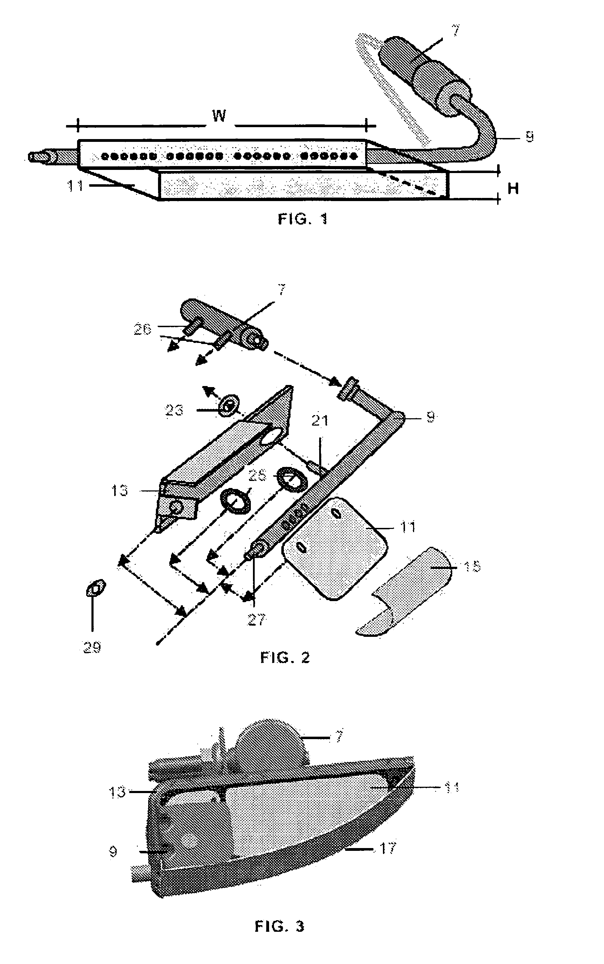

In Figure 1 the essential elements of the knee airbag according to the invention can be observed: a gas generator 7, a diffuser tube 9 and a cushion 11. The diffuser tube 9 is introduced into the cushion 11, and when a collision occurs the gas produced by the generator 7 passes to the inside of the cushion 11 through holes made in the diffuser tube 9 to set off the inflation so that it carries out its function of retaining the knees of the occupant of the vehicle.

As is shown schematically in Figure 1, the cushion 11 in the folded state has a much reduced height H and a large width W in the Y direction of the vehicle.

In Figure 2, it can be seen that the airbag also comprises a housing 13 and a cover 15. The diffuser tube 9 is fixed to the metal housing 13 by means of the collaboration of a screw 21 with a nut 23. Furthermore. For its part, the fixing of the cushion 11 to the diffuser tube 9 is carried out by means of clamps 25.

The diffuser tube 9 includes an element 27 at its end for its fixing to the vehicle structure in cooperation with element 29.

The gas generator 7 includes fixing elements 26 for fixing it to the structure of the vehicle independent of the housing 13 illustrating the possibility of locating the gas generator 7 and the remaining elements of the airbag in different positions of the vehicle structure.

The housing 13, formed by a sheet metal, is useful as a support for the essential elements of the airbag- pipe diffuser 9 and cushion 11 assembly - and of the deflecting element preventing the cushion 11 from being introduced in the control panel in the moment of deployment.

The housing 13 can belong to the surrounding of the vehicle if it allows fulfilling the functions indicated.

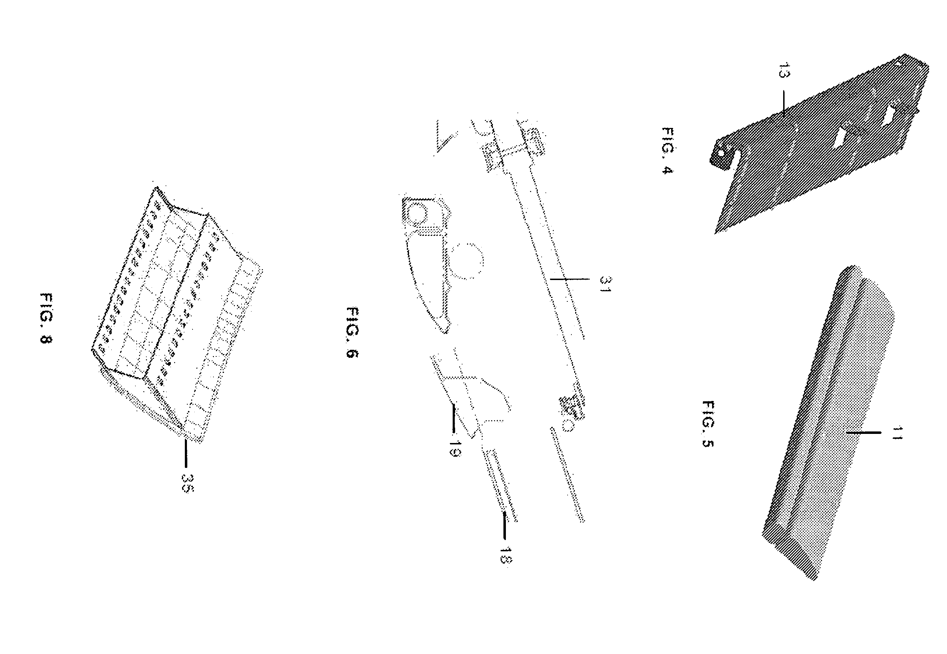

Figures 4, 5 and 6 show the different components of the airbag in a first embodiment of the invention in which the cover 17 is fixed rigidly to the housing 13.

The housing 13 is formed by sheet metal including ribs for preventing its deformation during the deployment of the cushion 11 and carries out three functions:
- Supporting the gas generator 7.
- Supporting the diffuser pipe 9 and the cushion 11.
- Fixing the airbag assembly to the vehicle structure.

The diffuser tube 9 is joined to the gas generator 7 at one end and closed at the other end and carries out two functions:
- Conducting the gas from the generator 7 to the cushion 11.
- Fixing the cushion 11 to the housing 13.

The gas generator 7 is a simple hybrid generator.

The cushion 11 which is shown in the folded state, by means of a process such as that which shall be explained in detail below, is made from PA 6.6 and has a 25 liter capacity in the deployed state.

The cover 17 is made from LDPE.

Figure 6 shows a possible location of the airbag in the vehicle structure below the plastic cover 18 of the steering column 31 and behind the on-board panel 19.

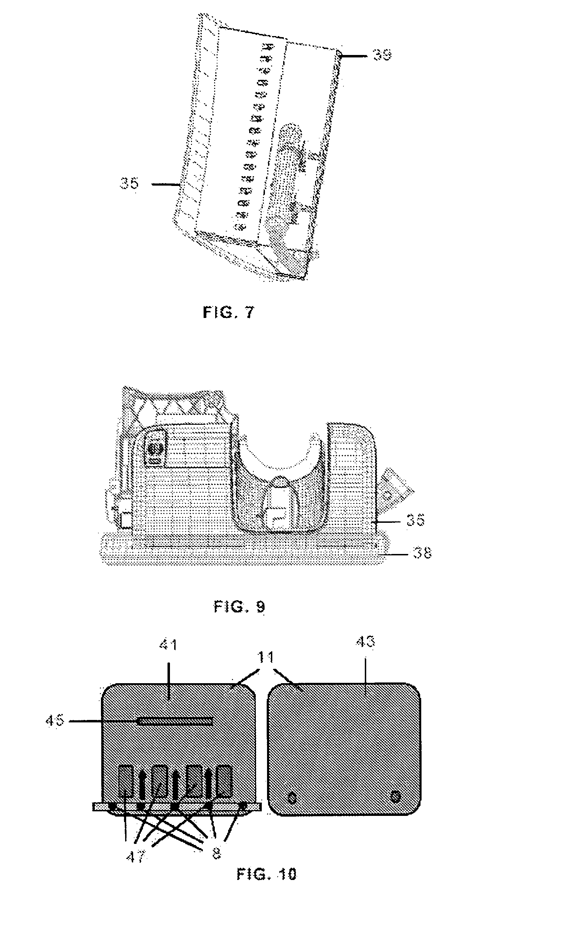

Figures 7, 8 and 9 show a second embodiment of the invention, the essential difference of which with the first embodiment being based on the existence of a visible cover 35 of the airbag adapted to the style of the on-board panel 38. The joining of the cover 35 to the housing 39 is not rigid but allows relative movement which makes it able to absorb the tolerances with respect to the on-board panel 38.

Figure 10 schematically shows the front 41 and rear 43 sides of the cushion 11 with straps 45 and 47 for controlling the shape of the cushion during its deployment. Even though the use of straps for this purpose is well-known, it must be pointed out that the structuring of the knee airbag of the present invention allows the location of the straps 47 in the lower area of the airbag near the diffuser tube and between its outlet openings 8, thus allowing a reduction in volume in that area and a quick diffusion of the gas towards the upper area which will come into contact with the knees of the occupant of the vehicle.

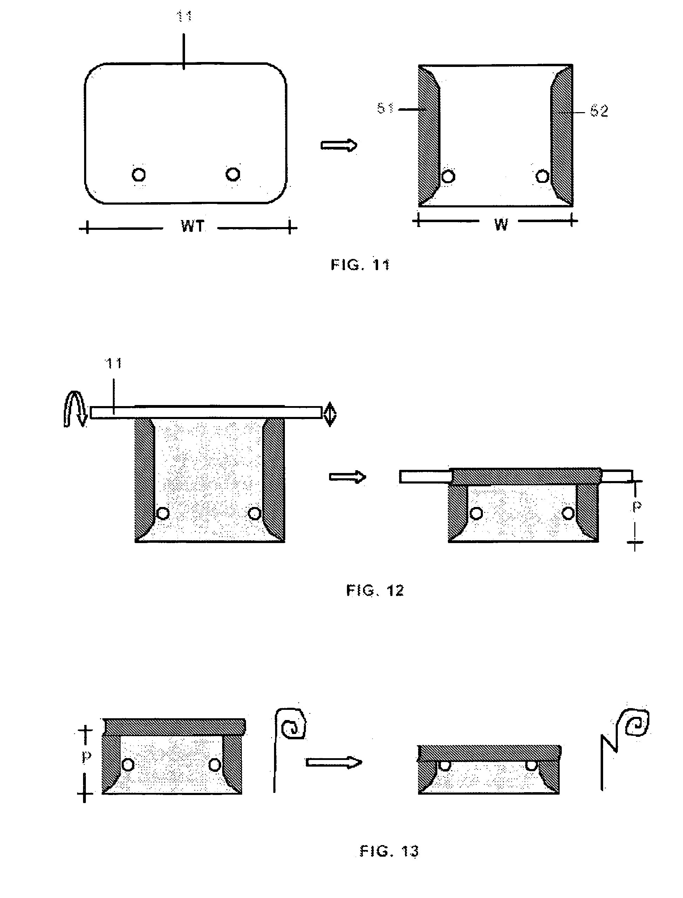

The three steps for folding the cushion are illustrated respectively in Figures 11-13.

The first step consists of folding the sides 51, 52 of the cushion, of an initial width WT, inwardly to the extent necessary for reaching the maximum width W compatible with the location of the airbag in the vehicle.

The second step consists of a helical folding inwardly with a 40 mm bar 45, leaving a part P of the cushion 11 unfolded.

The third step consists of a folding in a corrugated fashion towards part P.

In this way, in the airbag according to the invention a substantial part of cushion 11 is not folded in the Y direction, facilitating on one hand the deployment of the cushion and on the other the airbag effectively protecting the knees of the occupant of the vehicle because the width W is sufficient to cover them, preventing the risk that the airbag will deploy between them as happens in some airbags known in the prior art. The width W must be the greatest possible and the height H the least possible that are compatible with the configuration of the area of the vehicle where the airbag is located. Any other folding process that allows obtaining the same results would also be admissible for carrying out this invention.

In a preferred embodiment of the invention it is estimated that:
- W/WT > 0.5
- W > 35 cm.
- H < 3.5 cm

Although several embodiments of the invention have been described and shown, it is obvious that modifications comprised within the scope thereof can be introduced, and the scope is not to be considered limited to said embodiments but rather to the content of the following claims.

## Claims

1. An airbag intended for retaining the knees of the occupants of automotive vehicles during a collision, comprising an cushion (11) that can be inflated with the gas provided by a gas generator (7), a protective cover (15, 17, 35) of the airbag, a diffuser tube (9) connected to the gas generator (7), which is fixed to the inflatable cushion (11) along one of its sides and a metal housing (13, 39) for supporting the airbag assembly and fixing it to the vehicle, being the inflatable cushion (11) folded such that in the Y direction a part of width W remains deployed, **characterized in that** the ratio between the width W of the folded part of the inflatable cushion (11) and the width WT of the deployed cushion in the Y direction is greater than 0.5.

2. An airbag intended for retaining the knees of the occupants of automotive vehicles during a collision according to claim 1, **characterized in that** the protective cover (17) is rigidly fixed to the housing (13).

3. An airbag intended for retaining the knees of the occupants of automotive vehicles during a collision according to claim 1, **characterized in that** the protective cover (35) is fixed to the housing (39) by means of means allowing allowance between both so as to facilitate the alignment of the cover (35) with the outer side of the area of the vehicle where the airbag is fixed.

4. An airbag intended for retaining the knees of the occupants of automotive vehicles during a collision according to any of the previous claims, **characterized in that** the cushion (11) includes several straps arranged in the area near the diffuser tube (9) and between its openings (8).

5. An airbag intended for retaining the knees of the occupants of automotive vehicles during a collision according to claim 4, **characterized in that** the inflatable cushion (11) is folded in three steps:
- in the first step, its side edges (51, 52), which are sized so that the folded cushion has the mentioned width L, are folded inwardly;
- in the second step, the cushion is helically folded inwardly, leaving a part P deployed.
- in the third step, part P is folded inwardly in a corrugated fashion.

## Patentansprüche

1. Airbag, der zum Rückhalten der Knie der Insassen von Kraftfahrzeugen während einer Kollision bestimmt ist, mit einem Sack (11), der mit dem durch einen Gasgenerator (7) bereitgestellten Gas aufgeblasen werden kann, einer Schutzabdeckung (15, 17, 35) des Airbags, einem mit dem Gasgenerator (7) verbundenen Diffusorrohr (9), das am aufblasbaren Sack (11) entlang einer seiner Seiten befestigt ist, und einem Metallgehäuse (13, 39) zum Abstützen der Airbag-Anordnung und zu ihrem Befestigen am Fahrzeug, wobei der aufblasbare Sack (11) so gefaltet ist, daß in Y-Richtung ein Teil einer Breite W entfaltet bleibt, **dadurch gekennzeichnet, daß** das Verhältnis zwischen der Breite W des gefalteten Teils des aufblasbaren Sacks (11) und der Breite WT des entfalteten Sacks in Y-Richtung größer als 0,5 ist.

2. Airbag, der zum Rückhalten der Knie der Insassen von Kraftfahrzeugen während einer Kollision bestimmt ist, nach Anspruch 1, **dadurch gekennzeichnet, daß** die Schutzabdeckung (17) am Gehäuse (13) starr befestigt ist.

3. Airbag, der zum Rückhalten der Knie der Insassen von Kraftfahrzeugen während einer Kollision bestimmt ist, nach Anspruch 1, **dadurch gekennzeichnet, daß** die Schutzabdeckung (35) am Gehäuse (39) mit Hilfe einer Einrichtung befestigt ist, die ein Spiel zwischen beiden ermöglicht, um so die Ausrichtung der Abdeckung (35) zur Außenseite des Fahrzeugbereichs zu erleichtern, in dem der Airbag befestigt ist.

4. Airbag, der zum Rückhalten der Knie der Insassen von Kraftfahrzeugen während einer Kollision bestimmt ist, nach einem der vorstehenden Ansprüche, **dadurch gekennzeichnet, daß** der Sack (11) mehrere Bander aufweist, die im Bereich nahe dem Diffusorrohr (9) und zwischen dessen Öffnungen (8) angeordnet sind.

5. Airbag, der zum Rückhalten der Knie der Insassen von Kraftfahrzeugen während einer Kollision bestimmt ist, nach Anspruch 4, **dadurch gekennzeichnet, daß** der aufblasbare Sack (11) in drei Schritten gefaltet ist :
- im ersten Schritt werden seine Seitenkanten (51, 52), die so bemessen sind, daß der gefaltete Sack die genannte Breite W bat, nach innen gefaltet;
- im zweiten Schritt wird der Sack nach innen eingerollt, wobei ein Teil P entfaltet bleibt;
- im dritten Schritt wird der Teil P auf gewellte Weise nach innen gefaltet.

## Revendications

1. Airbag conçu pour retenir les genoux des occupants de véhicules automobiles lors d'une collision, comprenant un coussin (11) pouvant être gonflé avec le gaz fourni pas un générateur de gaz (7), un couvercle protecteur (15, 17, 35) de l'airbag, un tube diffuseur (9) raccordé au génèrateur de gaz (7), qui est fixé au coussin gonflable (11) le long de l'un de ses côtés, et un boîtier métallique (13, 39) permettant de supporter l'ensemble d'airbag et de le fixer au véhicule, le coussin gonflable (11) étant plié de telle sorte que, dans la direction Y, une partie de la largeur W reste déployée, **caractérisé en ce que** le rapport entre la larguer W de la partie pliée du coussin gonflable (11) et la largeur WT du coussin déployé dans la direction Y est supérieur à 0,5.

2. Airbag conçu pour retenir les genoux des occupants de véhicules automobiles lors d'une collision selon la revendication 1, **caractérisé en ce que** le couvercle protecteur (17) est fixé de manière rigide au boîtier (13).

3. Airbag conçu pour retenir les genoux des occupants de véhicules automobiles lors d'une collision selon la revendication 1, **caractérisé en ce que** le couvercle protecteur (35) est fixé au boîtier (39) grâce à un moyen permettant de créer un certain jeu entre les deux de manière à faciliter l'alignement du couvercle (35) avec le côté externe de la zone du véhicule où est fixé l'airbag.

4. Airbag conçu pour retenir les genoux des occupants de véhicules automobiles lors d'une collision selon l'une quelconque des revendications précédentes, **caractérisé en ce que** le coussin (11) inclut plusieurs sangles agencées dans la zone à proximité du tube diffuseur (9) et entre ses ouvertures (8).

5. Airbag conçu pour retenir les genoux des occupants de véhicules automobiles lors d'une collision selon la revendication 4, **caractérisé en ce que** le coussin gonflable (11) est plié en trois étapes :
- à la première étape, ses bords latéraux (51, 52), qui sont dimensionnés de telle sorte que le coussin plié à la largeur L mentionnée, sont pliés vers l'intérieur ;
- à la deuxième étape, le coussin est plié de façon hélicoïdale vers l'intérieur, en laissant une partie P déployée ;
- à la troisième étape, la partie P est pliée vers l'intérieur de façon ondulée.
